# DEMANDE DE BREVET EUROPEEN

(11) **EP 1 085 143 A1**
(43) Date de publication de la demande: **21.03.2001**
(21) Numéro de dépôt: 00490033.8
(22) Date de dépôt: 12.09.2000
(51) Int. Cl.: E04F 19/04, H02G 3/04

(54) **Plinthe amovible permettant le passage de fils ou cables électriques**

(30) Priorité: 15.09.1999 FR 9911698
(71) Demandeur: Probois, S.A., 59390 Toufflers (FR)
(72) Inventeur: Wabant, Didier, 59670 Cassel (FR); Proot, Bernard, 59910 Bondues (FR); Vanpoucke, Pierre, 59700 Marcq en Baroeul (FR)
(74) Mandataire: Ecrepont, Robert

(57) **Abrégé**

La présente invention concerne une plinthe du type comprenant un élément décoratif (3) formant la face apparente de la plinthe et un élément support (2) destiné à être fixé au bas d'un mur et qui comporte une première face destinée à être fixée au bas dudit mur, une seconde face destinée à être recouverte par ledit élément décoratif (3) et des moyens d'accroche dudit élément décoratif. Selon l'invention, de manière caractéristique, en ce que ledit élément support (2) comporte sur sa seconde face une rainure contenant une goulotte en matériau isolant électriquement (5) pour le passage de câbles électriques.

## Description

La présente invention concerne une plinthe présentant une structure particulière permettant le passage en toute sécurité de câbles électriques.

La rénovation des bâtiments ou tout simplement le changement d'un revêtement de sol oblige à arracher les plinthes qui sont en général de simples lattes de bois plus ou moins travaillées ou décorées et simplement collées ou clouées au bas des murs. L'arrachage des plinthes les détériore tellement qu'il est bien souvent nécessaire de changer toutes ou partie des plinthes et des revêtements de mur et sol, ce qui augmente le coût de la rénovation.

Des plinthes démontables ont été décrites, notamment, dans le document FR 2 718 478. De telles plinthes comportent un élément support destiné à être fixé au mur et sur lequel vient s'emboîter un élément décoratif qui forme la partie apparente de la plinthe. Pour changer la plinthe ou en modifier la position, il suffit de décrocher l'élément décoratif de l'élément support puis de désolidariser l'élément support du mur ; celui-ci étant en général vissé, cette opération s'effectue facilement et sans dommage. Une telle plinthe peut donc être démontée et déplacée sans limite ce qui rend son utilisation très pratique.

En revanche, ce type de plinthe ne permet pas le passage de fils électriques. Ceux-ci doivent donc être disposés au-dessus de la plinthe dans une gaine plastique notamment en " P.V.C ", ce qui est inesthétique et peu pratique.

Le document FR 2 608 194 décrit bien un type de plinthe permettant le passage d'un cable. Ce type de plinthe comporte une rainure permettant de loger un seul cable électrique de faible diamètre. Ce type de plinthe présente trois inconvénients majeurs. D'une part, il n'est pas possible de loger dans ce type de plinthe plus de deux fils ni des câbles présentant un diamètre plus important. D'autre part, l'accès aux fils électriques nécessite, du moins pour l'un des deux fils, de dévisser la plinthe hors du mur. De plus, une telle plinthe ne permet plus de respecter les normes actuellement en vigueur pour le passage des fils électriques.

Il existe par ailleurs des chemins de câbles tels que par exemple décrits dans le document EP 0 504 493 qui satisfont aux normes de sécurité mais qui du fait de leur aspect esthétique et de leur structure complexe les obligent à n'utiliser que du " PVC ".

Ils ne peuvent avoir qu'une seule base de recouvrement.

Le but de la présente invention est donc de proposer une plinthe facilement démontable qui permet le passage en toute sécurité pour l'utilisateur de câbles électriques et dont l'esthétique et les dimensions peuvent varier à l'infini.

Ce but est atteint au moyen d'une plinthe du type comprenant, de manière connue, un élément décoratif formant la face apparente de la plinthe et un élément support destiné à être fixé au bas d'un mur et qui comporte une première face destinée à être fixée au bas dudit mur, une seconde face destinée à être recouverte par l'élément décoratif et des moyens d'accroche de cet élément décoratif. De manière caractéristique, selon l'invention, l'élément support comporte sur sa seconde face une rainure longitudinale apte à former et/ou contenir au moins partiellement une goulotte en matériau isolant électriquement pour le passage de fils ou câbles électriques.

La structure en deux éléments de la plinthe la rend d'une part facilement démontable. D'autre part, la présence de la goulotte isolante permet le passage d'un ou plusieurs fils ou câbles électriques, sans restriction de diamètre et sans risque pour l'utilisateur même en cas de dégradation de la gaine isolante d'un des fils ou câbles. De plus, la goulotte étant accessible facilement par retrait de l'élément décoratif, l'accès aux fils ou câbles ne nécessite pas de démonter la plinthe elle-même, il suffit d'en retirer l'élément décoratif.

Selon l'invention, la goulotte isolante peut être indifféremment au moins partiellement formée par la rainure ou être au moins partiellement contenue dans la rainure. Cette goulotte peut être fermée par un couvercle isolant ajouté ou simplement par la pose de l'élément décoratif qui dans ce cas est au moins partiellement réalisé en un matériau électriquement isolant.

Le type de goulotte utilisée n'est pas limitatif de l'invention. Néanmoins, de préférence, la goulotte comprend un conteneur et un couvercle en matériau électrique isolant, de préférence, mais non limitativement en " PVC", destiné à fermer le conteneur.

Selon un mode de réalisation préféré, la goulotte est amovible ce qui permet d'utiliser des goulottes isolantes du commerce réduisant ainsi le coût de fabrication de la plinthe de la présente invention.

Selon une variante préférée, la rainure de l'élément support est ménagée en sorte que sa paroi de fond forme un angle compris entre 5° et 15° avec la première face de l'élément support de sorte que la rainure inclinée vers le mur maintienne les câbles électriques dans le fond de la goulotte.

La rainure de l'élément support est ménagée en sorte que, lors de l'adjonction de la goulotte " PVC ", cette goulotte fait au moins partiellement saillie de la rainure de l'élément support pour venir s'emboîter dans une autre rainure réalisée sur la face interne de l'élément décoratif afin d'obtenir lors de l'emboitage un blocage de l'élément décoratif évitant le démontage par simple mouvement de soulèvement de l'élément décoratif.

Les caractéristiques de la présente invention et les différents avantages qu'elle procure seront mieux compris à la lecture de la description qui suit et fait référence aux dessins annexés d'un mode particulier de réalisation donnés à titre d'exemples non limitatifs sur lesquels :
- la figure 1 représente un premier mode de réalisation de la plinthe de la présente invention ;
- la figure 2 représente une première variante de réalisation de la plinthe représentée sur la figure 1 ;
- les figures 3 et 4 représentent une juxtaposition de plinthes selon la présente invention assemblées en sorte d'équiper un mur ;
- la figure 5 représente une autre variante de la plinthe et
- la figure 6 représente l'outil spécifique permettant de démonter l'élément décoratif de l'élément support.

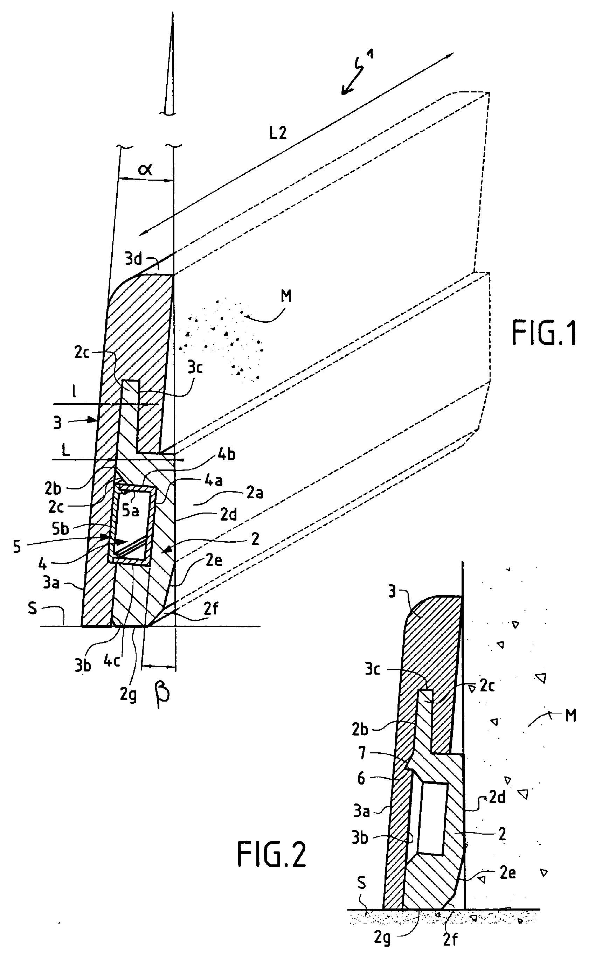

En référence à la figure 1, un mode de réalisation de la plinthe 1 de la présente invention comporte un élément support 2 destiné à être fixé sur un mur M et un élément décoratif 3. L'élément support 2 présente une première face 2a destinée à être fixée sur le mur M et une seconde face 2b dite de fixation recouverte par l'élément décoratif 3. La seconde face 2b de l'élément support 2 comporte, sur sa partie supérieure, une partie de liaison mâle 2c d'épaisseur I inférieure à l'épaisseur L de l'élément support 2 et qui s'étend, de préférence, sensiblement sur toute la longueur L2 de ce dernier.

L'élément décoratif 3 comporte une première face 3a qui constitue la partie apparente de la plinthe 1, une seconde face 3b destinée à être en contact avec la seconde face 2b de l'élément support 2 et une partie concave ou gorge 3c apte à coopérer avec la partie de liaison mâle 2c permettant l'emboîtement de l'élément décoratif 3 sur l'élément support 2. La seconde face 2b de l'élément support 2 forme un angle a avec la première face 2a de l'élément support 2. Cet angle a est de préférence compris entre 5° et 15° et permet de fixer l'élément décoratif 3 sur l'élément support 2 en sorte que la face apparente 3a forme avec la première face 2a de l'élément support 2 et avec le mur M un angle aigu, de préférence sensiblement égal à a et que le bord supérieur 3d de l'élément décoratif 3 vienne en contact avec le mur M, procurant ainsi un aspect esthétique particulièrement satisfaisant, protégeant la plinthe de toute introduction de poussière et assurant ainsi une bonne fixation et un bon calage de l'élément décoratif 3 sur l'élément support 2 en offrant un point d'appui supplémentaire contre le mur M et en permettant de rattraper les éventuelles inégalités du mur M.

L'élément support 2 notamment en bois comprend également une rainure 4 (figure 1) destinée à contenir une goulotte en matériau isolant électriquement 5. La rainure 4 présente une paroi de fond 4a, une paroi supérieure 4b et une paroi inférieure 4c. La goulotte 5 comprend un conteneur 5a et un couvercle amovible 5b destiné à fermer le conteneur 5a. Le couvercle 5b peut être emboîté ou clipsé sur la face ouverte du conteneur 5a. La goulotte 5 est insérée dans la rainure 4, le couvercle 5b fermant le conteneur 5a restant de préférence comme représenté sur la figure 1, accessible au niveau de la rainure 4. La portion évidée 66, bordant la rainure 4, permet d'extraire et de retirer plus facilement la goulotte 5 de la rainure 4.

La goulotte peut être fixée par un adhésif au fond de la rainure 4.

Lorsque l'élément support et/ou l'élément décoratif sont en un matériau non isolant électriquement, la goulotte constitue alors une conduite interne isolante respectant les normes.

L'élément support 2 peut être également en matériau plastique et la goulotte sera soit rapportée, soit partiellement formée directement lors de la fabrication du support.

En effet, il faudra prévoir un couvercle pour former la goulotte.

L'élément décoratif comprendra au moins une face apparente en bois tel un placage.

La paroi de fond 4a de la rainure 4 forme la première face 2a de l'élément support 2 un angle β compris entre 5° et 15° qui incline légèrement la paroi inférieure 4c de la rainure 4 vers le bas du mur M ; la goulotte 5 est donc ainsi mieux calée dans la rainure 4 et l'utilisateur a donc tout le loisir de fixer l'élément décoratif 3 sans crainte que la goulotte et/ou les cables électriques placés dans la goulotte ne tombent hors de la rainure 4.

C'est un élément technique très intéressant.

La première face 2a de l'élément support 2 destinée à être fixée contre le mur M comporte une première portion de fixation 2d sensiblement plane destinée à être appliquée contre le mur M, une seconde portion 2e légèrement inclinée vers l'élément décoratif 3 et qui permet de mieux caler la première portion de fixation 2d en fonction des aspérités éventuelles de la surface du mur M. Une troisième portion 2f forme un pan coupé plus incliné et n'est pas en contact avec le mur ce qui permet un bon positionnement de la base 2g de l'élément de support 2 contre le sol S. Cette structure en trois portions permet d'adapter la plinthe de l'invention à des murs plus ou moins réguliers et qui ne sont pas parfaitement perpendiculaires au sol.

En référence à la variante de réalisation représentée sur la figure 2, l'élément support 2 comprend des moyens complémentaires de fixation de l'élément de décoratif 3 sur l'élément support 2. Ces moyens complémentaires sont, par exemple, comme représenté sur la figure 2 constitués d'une nervure 6 en saillie qui équipe la seconde face 2b de l'élément de support 2 qui est destinée à être en regard avec l'élément décoratif 3. Cette nervure 6 coopère avec une rainure de fixation 7 de forme complémentaire, ménagée dans l'épaisseur de l'élément décoratif 3. La nervure de fixation 7 et la rainure 6 peuvent équiper toute la longueur de l'élément décoratif 3 ou être disposées à un ou plusieurs endroits distincts qui sont susceptibles d'être placés en regard lors du montage de la plinthe 1. La position de la nervure 6 n'est pas limitative de la présente invention. Elle peut être disposée au-dessus ou au-dessous de la rainure 4.

Elle évite le déboîtement accidentel de l'élément de fixation.

La nervure 6 peut coopérer avec une butée constituée par la goulotte elle-même.

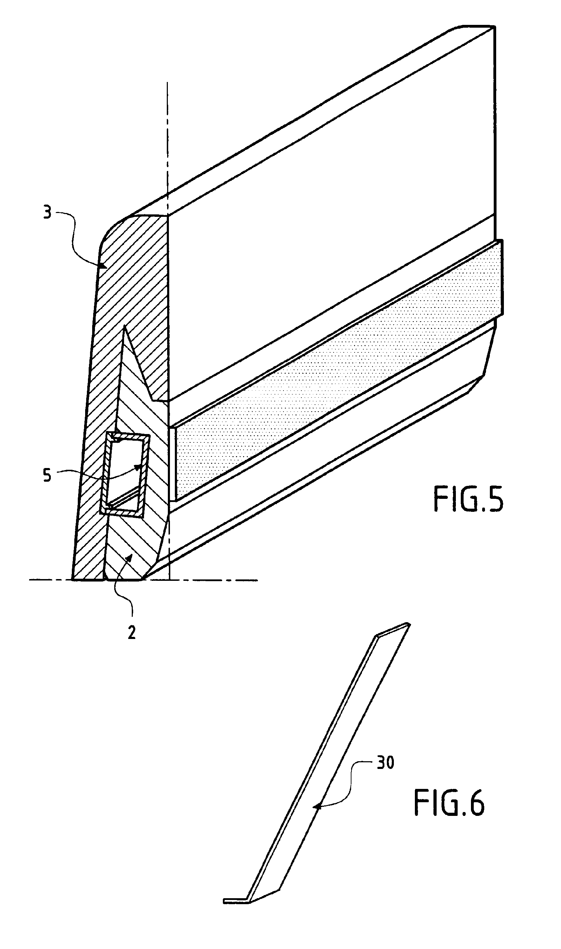

Comme il apparaît à la figure 5, la nervure 6 pourra être constituée par la goulotte en saillie de son logement et coopérant alors avec une rainure aménagée dans l'élément décoratif.

Il faudra de ce fait utiliser un outil 30 spécifique permettant d'effectuer une traction arrière et simultanément un soulèvement de l'élément décoratif en passant cet outil spécifique en dessous et à l'extrémité de l'élément décoratif emboîté dans l'élément support.

Un jeu non représenté permet d'engager l'outil sous l'élément décoratif.

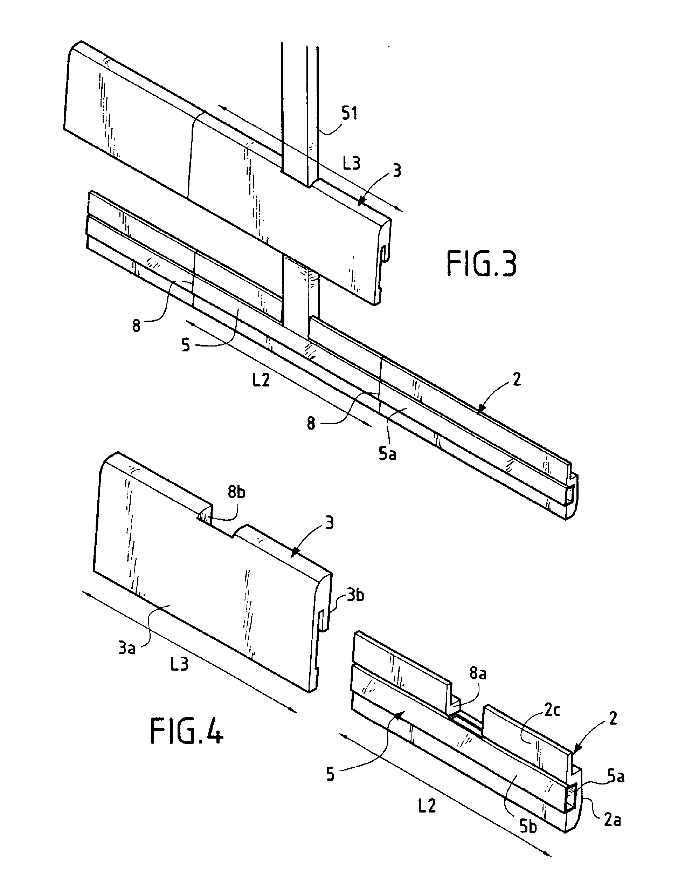

En référence à la figure 4, l'élément support 2 et l'élément décoratif 3 ne présentent pas la même longueur. De préférence, la longueur L3 de l'élément décoratif 3 est supérieure à la longueur L2 de l'élément support 2 en sorte que lorsque plusieurs éléments support 2 sont juxtaposés, un élément décoratif vienne recouvrir les deux joints 8 entre les deux éléments support 2. De cette manière, l'accès aux câbles électriques contenus dans la goulotte 3 est totalement impossible lorsque la plinthe de l'invention est assemblée. En effet, même si par exemple, un enfant vient à introduire un objet pointu entre deux éléments décoratif 3 cet objet viendrait alors en buté non à une jonction entre deux goulottes 5 mais au niveau du couvercle 5b d'une goulotte 5 qui présente à cet endroit une surface continue et donc protège parfaitement les fils ou câbles contenus dans la goulotte 5.

En référence aux figures 3 et 4, une variante de réalisation de la plinthe de la présente invention qui permet en particulier le raccordement à une sortie d'appareil ou d'interrupteur comporte une encoche 8a ménagée dans l'élément support 2 et une encoche 8b ménagée dans l'élément décoratif 3. L'encoche 8a est telle qu'elle permet d'accoler deux goulottes 5 et 5' sensiblement perpendiculaires l'une à l'autre. De préférence, l'encoche 8a n'a pas une profondeur excédant la profondeur de la rainure 4 en sorte de ne pas fragiliser l'élément support 2. L'encoche 8b de l'élément décoratif 3 est conformée en sorte de coopérer avec l'encoche 8a de l'élément support 2. La goulotte 5 disposée dans la rainure 4 présente une perforation 5c au niveau de son conteneur 5a qui coïncide avec l'encoche 8a. Le raccordement entre les deux goulottes 5 et 5' s'opère par simple juxtaposition de l'extrémité ouverte de la goulotte 5' avec une perforation ménagée dans la goulotte 5. L'élément décoratif 3 est ensuite emboîté sur l'élément support 2, l'encoche 8b laissant passer la goulotte sensiblement verticale 5'.

Le mode de fixation de l'élément support 2 sur le mur M n'est pas limité dans le cadre de l'invention. Ainsi, il est possible de coller l'élément support 2 sur le mur M, de l'y visser ou encore d'équiper la portion 2d de la première face 2a de l'élément support d'une ou plusieurs bandes adhésives revêtue d'une bande protectrice.

La goulotte est amovible. Par exemple, elle peut être maintenue par serrage, coïncement ou par une colle repositionnable ou encore des clips.

## Revendications

1. Plinthe (1) du type comprenant :
- un élément décoratif (3) formant la face apparente de la plinthe ; et
- un élément support (2) destiné à être fixé au bas d'un mur (M) et qui comporte une première face (2a) destinée à être fixée au bas dudit mur, une seconde face (2b) destinée à être recouverte par ledit élément décoratif (3) et des moyens d'accroche (2c) dudit élément décoratif, au moins l'un des éléments décoratifs et support étant en matériau non isolant électriquement,
cette plinthe étant **caractérisée** en ce que ledit élément support (2) comporte sur sa seconde face (2b) une rainure (4) contenant une goulotte en matériau isolant électriquement (5) pour le passage de câbles électriques.

2. Plinthe selon la revendication 1, **caractérisée** en ce que la goulotte (5) comprend un conteneur (5a) et un couvercle (5b) apte à fermer ledit conteneur (5a).

3. Plinthe selon la revendication 1 ou 2, **caractérisée** en ce que la goulotte (5) est amovible de la rainure (4).

4. Plinthe selon l'une quelconque des revendications 1 à 3, **caractérisée** en ce que la rainure (4) est ménagée en sorte que sa paroi de fond (4a) forme un angle (β) compris entre 5 degrés et 15 degrés avec la première face (2a) de l'élément support (2).

5. Plinthe selon l'une quelconque des revendications 1 à 4, **caractérisée** en ce qu'elle comporte des moyens complémentaires (6, 7) d'accroche de l'élément décoratif (3).

6. Plinthe selon la revendication 5, **caractérisée** en ce que les moyens complémentaires d'accroche comprennent une nervure (6) disposée sur l'élément support (2) et apte à coopérer avec une rainure (7) ménagée dans l'épaisseur de l'élément décoratif (2).

7. Plinthe selon la revendication 5, **caractérisée** en ce que la rainure de l'élément support est ménagée en sorte que, lors de l'adjonction de la goulotte PVC, cette goulotte fait au moins partiellement saillie de la rainure de l'élément support pour venir s'emboîter dans une autre rainure réalisée sur la face interne de l'élément décoratif afin d'obtenir lors de l'emboitage un blocage de l'élément décoratif évitant le démontage par simple mouvement de soulèvement de l'élément décoratif.

8. Plinthe selon l'une quelconque des revendications 1 à 7, **caractérisée** en ce que la première face (2a) de l'élément support (2) présente une première portion (2d) apte à être appliquée contre le mur, une seconde portion (2e) formant un angle aigu avec ladite première portion (2d) et une troisième portion (2f) formant un pan coupé orienté vers la seconde face (2b) de l'élément support (2).

9. Plinthe selon l'une quelconque des revendications 1 à 8, **caractérisée** en ce que la longueur (L3) de l'élément décoratif (3) est différente de la longueur (L2) de l'élément support (2).

10. Plinthe selon l'une quelconque des revendications 1 à 9, **caractérisée** en ce que l'élément support (2) et l'élément décoratif (3) comportent chacun une encoche (8a, 8b) pour le raccordement de deux goulottes sensiblement perpendiculaires (5 ; 5'), l'encoche (8a) ménagée dans l'élément support (2) débouchant dans la rainure (4).
